# FASCICULE DE BREVET EUROPEEN

(11) **EP 3 225 551 B1**
(45) Date de publication et mention de la délivrance du brevet: **08.01.2025**
(21) Numéro de dépôt: 17163322.5
(22) Date de dépôt: 28.03.2017
(51) Int. Cl.: B60N 2/01, B64D 11/06

(54) **ENSEMBLE DE SIÈGES Á FAUTEUILS AGENCÉS EN QUINCONCE**
ANORDNUNG VON VERSETZTEN SESSELN
ASSEMBLY OF ARMCHAIR SEATS IN STAGGERED ARRANGEMENT

(30) Priorité: 31.03.2016 FR 1652848
(43) Date de publication de la demande: 04.10.2017
(73) Titulaire: Airbus Atlantic, 17300 Rochefort (FR)
(72) Inventeur: TRILLAUD, Benoît, 17620 ECHILLAIS (FR); SAINT-JALMES, Bruno, 82024 Taufkirchen (DE); SCHMIDT-SCHAEFFER, Tobias, 82024 Taufkirchen (DE)
(74) Mandataire: Ipside

(56) Documents cités:
- EP-A1- 1 568 607
- EP-A1- 2 944 571
- EP-A1- 2 974 961
- EP-A2- 1 236 642
- EP-A2- 2 289 798
- WO-A1-2012/140515
- WO-A1-2014/180538
- GB-A- 2 476 385

## Description

### Domaine de l'invention

L'invention appartient au domaine de l'aménagement des espaces passagers des véhicules de transport de personnes.

L'invention concerne en particulier un ensemble de sièges, convertibles en lits, comportant des fauteuils agencés en rangées décalées.

Plus particulièrement l'invention concerne un agencement dans lequel un passage entre deux sièges successifs d'une rangée est réduit en largeur sans nuire au confort de circulation dans le passage.

### Art antérieur

L'aménagement des cabines de transport de passagers est souvent confronté au maintien d'un confort suffisant du passager pour offrir des conditions attractives en particulier lorsqu'il doit être supporté des voyages relativement long, voire des durées de voyage couvrant une période de sommeil.

Une telle situation est susceptible de se trouver par exemple dans les voyages en autocars, les traversées maritimes et les vols moyens ou longs courrier en avion.

Pour améliorer le confort des passagers dans ces conditions, notamment des passagers voyageant dans les classes supérieures, classes affaires ou premières classes, il est connu de proposer des sièges qui peuvent être convertis en couchages plus ou moins complets à la volonté du passager par des mouvements relatifs de l'assise du fauteuil et de son dossier.

Il est également connu de rechercher une augmentation de la densité de passagers dans une cabine par un agencement en quinconce des fauteuils de deux rangées voisines de sorte que, lorsque les fauteuils sont convertis en couchette, la zone étroite des pieds se trouve au niveau de la zone large du dossier d'une rangée voisine ce qui permet de former un ensemble de deux rangées mitoyennes de fauteuils dont la largeur totale est inférieure à deux fois la largeur maximale d'un fauteuil.

Toutefois, dans un tel arrangement, il est nécessaire de maintenir, entre l'arrière d'un siège et l'avant d'un siège situé en arrière dans la même rangée, lorsque les sièges sont en couchettes, un passage pour l'occupant du siège décalé de la rangée mitoyenne lorsque celui-ci n'est pas contre une allée de circulation de la cabine. La largeur de ce passage vient s'ajouter à la longueur du siège converti en couchage pour déterminer le pas des sièges et pénalise le nombre de sièges qui peuvent être agencés pour une longueur de cabine donnée.

Une solution pour diminuer le pas des sièges consiste à réduire la largeur du passage, voir à supprimer le passage, lorsque les sièges sont convertis en couchette.

Cette solution n'est cependant pas acceptable car un passager éloigné d'une allée peut désirer quitter son siège et doit dans ce cas enjamber le siège qui le sépare de l'allée ou monter sur une partie surélevée formant un marche-pieds, comme par exemple dans la solution décrite dans le document US 2012/0298798 A1. EP 2 289 798 A2 montre un ensemble comportant une pluralité de sièges agencés en une rangée suivant un axe longitudinal X selon le préambule de la revendication 1.

### Exposé de l'invention

La présente invention a pour objet de remédier à ces inconvénients en apportant au passager, pour une longueur de couchage équivalente, un passage adapté à ses déplacements entre son siège et une allée distante.

Pour cela, l'invention concerne un ensemble comportant une pluralité de sièges agencés en une rangée suivant un axe longitudinal X selon la revendication 1.

Il est ainsi réduit la largeur du passage, et donc la distance séparant deux fauteuils d'une même rangée, en limitant la plage en hauteur sur laquelle le passage est de largeur réduite pour permettre à un passager de circuler dans le passage sans gêne sensible, et en exploitant la réduction de la largeur minimale du passage pour diminuer le pas des sièges sans diminuer la longueur affectée à une personne pour son confort.

Dans une forme de réalisation, la largeur minimale Lmin du passage est comprise entre 200 mm et 300 mm, et la hauteur hzmin de ladite largeur minimale au dessus du plancher est comprise entre 200 mm et 500 mm. Il est ainsi maintenu une largeur de passage suffisante au niveau des parties inférieures des membres inférieurs d'une personne et la largeur minimale est voisine de la hauteur d'un plan de couchage dans une position lit d'un fauteuil qui est la plus exigeante en longueur.

Dans une forme de réalisation, la largeur maximale L(hz) du passage, dans le plan vertical dans lequel se trouve la largeur minimale Lmin dudit passage, est, pour les hauteurs hz inférieures à la hauteur hzmin, comprise entre 310 mm et 400 mm, et ladite largeur maximale est située entre le plancher et une hauteur hz égale ou inférieure à 150 mm, la largeur L(hz=0) du passage au niveau du plancher étant au moins égale à 250 mm. Il est ainsi maintenu à proximité du plancher une largeur adaptée au passage des pieds d'une personne circulant dans le passage.

Dans une forme de réalisation, une valeur minimale de la largeur L(hz) du passage mesurée dans une section horizontale, est, pour les hauteurs hz supérieures à la hauteur hzmin, supérieure à la largeur minimale Lmin dudit passage et inférieure ou égale à 400 mm, une plus grande valeur de la dite valeur minimale de la largeur L(hz) étant atteinte pour une hauteur hz comprise entre 600 mm 800 mm. Il est ainsi formé un passage élargi à des hauteurs correspondant à des parties également plus larges du corps d'une personne circulant dans le passage.

Dans une forme de réalisation, le caisson latéral d'un siège avant comporte un volume ouvert vers l'arrière formant un logement de pieds pour un occupant d'un siège arrière, dont le fauteuil est sensiblement aligné avec ledit volume ouvert du fait de l'agencement en quinconce des fauteuils et des caissons latéraux.

Dans une forme de réalisation, un fauteuil est convertible en lit par des mouvements relatifs d'un dossier et d'une assise dudit fauteuil pour former avec une surface sensiblement horizontale à demeure ou déployée dans le volume ouvert formant un logement de pieds, du caisson latéral du siège situé devant le siège du fauteuil considéré, un plan de couchage.

Dans une forme de réalisation, la largeur L(hz) du passage, dans la coupe formée dans un plan vertical dans lequel se trouve la largeur minimale Lmin dudit passage, est de 324+/-10 mm à une hauteur au-dessus du plancher (23) hz=130 mm, de 251+/- 10 mm pour hz=230 mm, de 232+/-10 mm pour hz=330 mm, de 235+/-10 mm pour hz=430 mm, de 246+/-10 mm pour hz=530 mm, de 267+/-10 mm pour hz=630 mm, de 308+/-10 mm pour hz= 730 mm.

Il est ainsi formé un ensemble de sièges qui permet, en particulier dans un agencement du type classe affaire d'un aéronef en ayant montré ses capacités à satisfaire le confort d'accès souhaité, de proposer des sièges convertibles en lits en minimisant l'impact sur la place nécessaire en longueur et en bénéficiant des avantages sur la largeur nécessaire, procurés par l'agencement en quinconce, lorsqu'un seul siège dans un ensemble à deux rangées de siège est bordé d'une allée de circulation.

### Présentation des figures

L'invention est décrite de manière détaillée en référence aux dessins qui représentent de manière schématique :
- la figure 1 : en vue dessus, un ensemble de 3 sièges suivant l'invention dont les fauteuils, orientés l'avant sensiblement vers une même direction, sont agencés en quinconce suivant deux rangées mitoyennes, les sièges étant représentés en configuration fauteuil ;
- la figure 2 : la section AA de l'ensemble de sièges de la figure 1, illustrant dans un plan vertical le passage formé entre un siège et une allée dans sa partie la plus étroite ;
- la figure 3 : en vue de profil, un ensemble de deux sièges décalés longitudinalement comme illustré sur la figure 1, et sur laquelle vue sont illustrés des plans sections à des hauteurs constantes par rapport à un plancher de référence ;
- les figures 4a à 4g : des coupes dans les plans horizontaux à différentes hauteurs matérialisés sur la vue de profil de la figure 3 et montrant les contours des formes enveloppes des sièges de la figure 3 ;
- la figure 5 : sur des vues en section verticale du passage dans sa partie la plus étroite correspondant à la section de la figure 2, des passagers de différentes tailles et morphologies engagés dans le passage : vue (a) pour un passager de petite taille correspondant au 5 ème percentile d'un échantillon de passager, vue (b) pour un passager de taille moyenne correspondant au 50 ème percentile de l'échantillon et vue ^{©} pour un passager de grande taille correspondant au 95 ème percentile de l'échantillon.

Sur les figures, les dessins ne sont pas nécessairement représentés à la même échelle.

Sur les figures des parties ou éléments similaires, même représentés dans des formes différentes, portent le même repère.

Les figures illustrent principalement les formes extérieures des sièges de l'ensemble et les éléments de détails, en particulier les structures intérieures des sièges, ne sont pas représentés ou seulement à titre accessoire pour la compréhension des dessins.

### Description détaillée d'un mode de réalisation

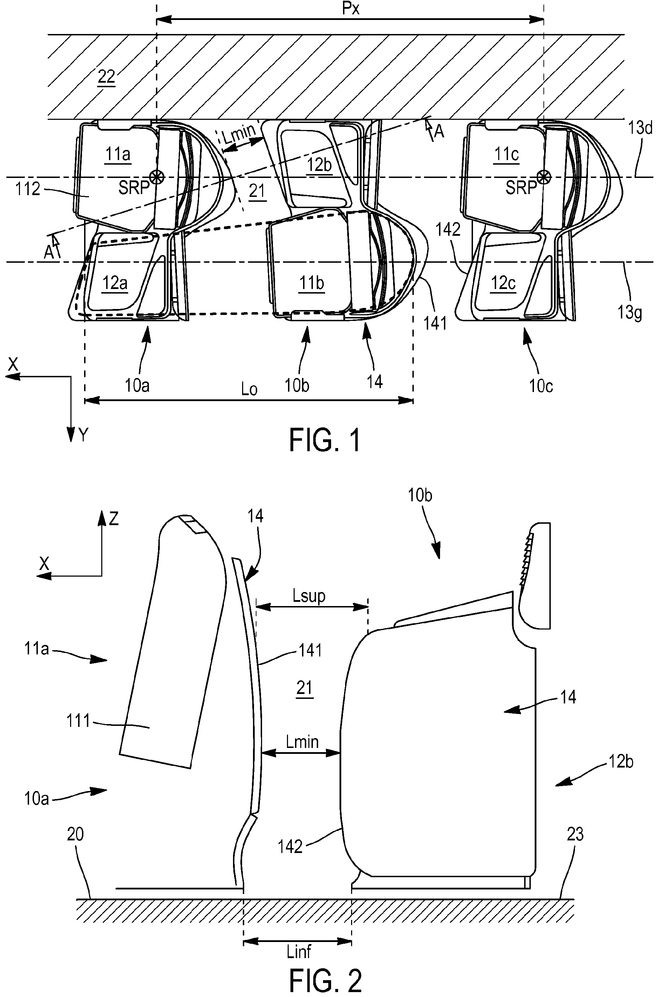

La figure 1 représente en vue de dessus un ensemble 100 de trois sièges 10a, 10b, 10c suivant un mode de réalisation de l'invention.

Dans l'ensemble 100 chaque siège 10a, 10b, 10c comporte un fauteuil, respectivement 11a, 11b, 11c, et comporte un caisson latéral, respectivement 12a, 12b et 12c, agencé sur un côté du siège.

Comme visible sur la figure 1, les fauteuils d'une part et les caissons latéraux d'autre part sont agencés en quinconce suivant deux rangées parallèles orientées suivant un axe longitudinal X d'un système d'axes lié à l'ensemble de siège.

Dans l'ensemble considéré, les fauteuils sont sensiblement orientés dans un même sens de sorte que des passagers occupant les différents fauteuils de l'ensemble de sièges regardent sensiblement tous dans une même direction.

Dans la suite de la description, il sera fait autant que de besoin référence à un système d'axes lié à l'ensemble de sièges dans lequel une direction de l'axe longitudinal X correspond à une direction longitudinale de l'ensemble de sièges et donc aux directions des axes longitudinaux 13d, 13g des rangées de sièges de l'ensemble 100.

L'axe longitudinal X est orienté positif vers l'avant de l'ensemble 100 qui correspond sensiblement vers l'avant des sièges, l'avant étant la direction vers l'avant telle qu'elle est comprise par un occupant d'un fauteuil, tous les fauteuils 11a, 11b, 11c de l'ensemble considéré étant orientés sensiblement dans un même sens.

Le système d'axes comporte également un axe vertical Z, perpendiculaire à l'axe longitudinal X, suivant une direction verticale et orienté positivement vers le haut.

Le système d'axes comporte un axe latéral Y dans un plan horizontal et orienté positivement vers la gauche, pour un occupant d'un fauteuil, de sorte à former un trièdre direct XYZ.

Chaque siège, 10a, 10b, 10c comporte une structure d'habillage, comportant une coque enveloppe, qui détermine les volumes occupés par le siège considéré et qui recouvre, tant pour des raisons mécaniques que pour des raisons esthétiques, les diverses parties fonctionnelles du fauteuil, respectivement 11a, 11b, 11c et du caisson latéral, respectivement 12a, 12b, 12c.

Dans la suite de la description il sera, par soucis de clarté, fait référence à l'un quelconque des sièges de la figure 1 lorsque la description s'adresse à un siège isolé, et il sera fait référence au siège 10a comme siège avant et au siège 10b comme siège arrière lorsque la description s'adresse à deux sièges se succédant suivant la direction longitudinale dans l'ensemble 100. Il doit être compris que ce choix est arbitraire, les différents sièges d'un ensemble étant similaires, à une symétrie miroir prés par rapport à un plan vertical XZ entre deux sièges successifs suivant la direction de l'axe longitudinal X.

Le caisson latéral 12a du siège 10a avant comporte un volume creux, ouvert vers l'arrière, dans lequel peut se déployer une surface horizontale formant un repose pieds 113, ou comportant une telle surface horizontale, sur laquelle l'occupant du fauteuil 11b du siège 10b arrière peut poser ses pieds.

Cette possibilité est offerte au passager du fauteuil arrière 11b qui est situé derrière et sensiblement aligné avec ledit caisson latéral du fait de l'agencement en quinconce des fauteuils de l'ensemble 100, en particulier lorsque ledit fauteuil arrière est converti en lit.

Dans la configuration lit, une assise 112 du fauteuil, un dossier 111 du fauteuil et le repose pieds 113 formé dans le caisson latéral situé devant le fauteuil déterminent des surfaces sensiblement horizontales et à une même hauteur, par rapport à un plan horizontal de référence 20, pour former un plan de couchage.

Ainsi, bien qu'associé dans l'exemple de réalisation illustré à un siège 10a avant pour lequel le caisson latéral 12a, intègre des fonctions dudit siège, telles que des fonctions de support ou table latérale, de rangement et d'intégrations de servitudes comme par exemple alimentations électriques, éclairage, panneaux de commandes ou distribution d'air, non représentés, la structure d'habillage, pour sa partie concernant le caisson latéral 12a, détermine également une extension maximale vers l'avant d'un siège 10b arrière, extension maximale associée à l'extrémité avant du lit formé pour ledit fauteuil arrière en position lit.

La structure d'habillage du siège 10b arrière, dans la partie correspondant au caisson latéral 12b, détermine ainsi une surface avant 142 de la structure d'habillage 14b dudit siège arrière.

La structure d'habillage du siège 10a avant, dans la partie correspondant au fauteuil 11a, détermine une surface arrière 141 de la structure d'habillage 14a dudit siège avant, extension associée à l'extrémité arrière du lit formé par ledit fauteuil en position lit.

Considérant l'agencement en quinconce des fauteuils, et compte tenu de la symétrie miroir entre les deux sièges 10a, 10b se suivant dans l'ensemble 100, la surface arrière 141, de la structure d'habillage 14a du siège 10a avant au niveau du fauteuil 11a, plus particulièrement du dossier dudit fauteuil, se trouve en vis-à-vis de la surface avant 142, de la structure d'habillage 14b du siège 10b arrière au niveau du caisson latéral 12b.

Compte tenu d'un pas Px des sièges dans l'ensemble 100, correspondant à une distance de séparation suivant la direction longitudinale X entre des points de référence SRP de deux fauteuils successifs alignés dans une rangée de siège de l'ensemble, et de la longueur Lo du couchage d'un siège en position lit, il est déterminé un espace intermédiaire 21 entre la surface arrière 141 au niveau du fauteuil 11a du siège avant et la surface avant 142 au niveau du caisson latéral 12b du siège arrière.

Comme représenté sur les illustrations, l'espace intermédiaire 21 forme un passage entre le fauteuil 11b du siège 10b arrière et une allée 22 de circulation située par rapport audit fauteuil sur un bord extérieur du siège du côté du caisson latéral 12b dudit siège.

La figure 1 illustre comment une largeur Lp du passage 21 dépend du pas Px des sièges et de la longueur Lo du lit.

Au premier ordre, la largeur Lp du passage est égale au pas Px des sièges diminué de la longueur Lo du lit et diminué d'une épaisseur Dcl correspondant aux épaisseurs locales cumulées de parois des structures d'habillage 14a, 14b.

Il est généralement admis que pour offrir un confort suffisant à un occupant d'un siège la largeur Lp doit être environ de 355 mm (14"), une valeur de 305mm (12") de cette largeur étant parfois considérée comme un minimum acceptable pour permettre à une personne de parcourir la faible distance séparant le fauteuil 11b de l'allée 22. En pratique, la largeur Lp est choisie, en fonction de critères de confort acceptables dans la catégorie de siège considérée, généralement différents pour les premières classes, les classes « affaires » ou les classes « tourismes ».

Cette première approche du calcul de la largeur Lp du passage ne prend cependant pas en compte la morphologie de l'occupant du siège et la dynamique de son déplacement lors du passage dans un sens ou l'autre entre le fauteuil 11b et l'allée 22.

Pour diminuer le pas Px des sièges de l'ensemble 100, sans diminuer la longueur Lo du lit, les formes de la structure d'habillage des sièges sont adaptées, comme dans l'exemple illustré, afin de réduire la largeur Lp du passage 21 tout en conservant pour un utilisateur du siège un passage 21 confortable pour ses déplacements de ou vers l'allée 22, la largeur d'un passage n'étant pas nécessairement une constante, tant sur une hauteur dudit passage que sur une longueur du dit passage entre le fauteuil et l'allée.

La figure 2b montre les formes extérieures des structures d'habillage 14a, 14b déterminant la géométrie du passage suivant une section verticale, repérée AA sur la figure 1, dans une zone du passage 21 dans laquelle la largeur est la plus étroite, et montre en particulier la surface arrière 141 de la structure d'habillage 14a du siège avant dans la zone du fauteuil et la surface avant 142 de la structure d'habillage 14b du siège arrière dans la zone du caisson latéral.

Comme illustré sur la section verticale de la figure 2, chacune des deux surfaces arrière 141 et avant 142 est convexe dans la zone considérée du passage, à des formes de raccordement près à proximité du plancher, de sorte à déterminer une largeur L(hz) du passage 21 fonction d'une hauteur hz au-dessus d'un plancher de cabine 23 sur laquelle se déplacent les utilisateurs des sièges, plancher qui peut correspondre au plan horizontal de référence 20 comme dans la suite de la description, ou être décalé d'une constante par rapport audit plan horizontal de référence.

Les formes convexes des surfaces arrière 141 et avant 142 se faisant face déterminent dans le plan vertical de la zone de passage la plus étroite une largeur minimale Lmin du passage 21 située à une hauteur hzmin au-dessus du plancher 23, qui correspond sensiblement, vue sur la section correspondant audit plan vertical, à la hauteur d'un point le plus avant de ladite surface avant et à la hauteur d'un point le plus arrière de ladite surface arrière.

Pour permettre le passage confortable de la partie inférieure des membres inférieurs avantageusement la largeur minimale Lmin est comprise entre 200 mm et 300 mm, cette dernière valeur étant limitée principalement pour le pas augmenter inutilement le pas des sièges et perdre le bénéfice de l'agencement de l'invention sur la réduction du pas des sièges, et ladite largeur minimale Lmin est située à une hauteur hzmin comprise entre 200 mm et 500 mm au-dessus du plancher.

Du fait de la convexité desdites surfaces avant et arrière se faisant face, la largeur L(hz) du passage 21 augmente continûment dans le sens des hauteurs hz décroissantes depuis la hauteur hzmin de largeur minimale, jusqu'à proximité du plancher, et augmente continûment également dans le sens des hauteurs hz croissantes depuis ladite hauteur hzmin.

L'élargissement du passage sous la hauteur hzmin de largeur minimale permet à une personne de disposer dans le passage 21 d'un volume agrandi de largeur augmentée par rapport à la largeur minimale dans la zone du passage de ses pieds. Cette zone élargie évite qu'un pied s'accroche et que la personne trébuche.

Afin de maintenir la possibilité pour un passager de se déplacer latéralement de profil dans le passage, la largeur maximale de la largeur du passage à proximité du plancher est comprise entre 310 mm et 400 mm et cette largeur maximale qui permet le passage des pieds est située entre le plancher et une hauteur de 150 mm au-dessus du plancher. Le passager peut ainsi soulever, au moins légèrement, ses pieds lors de son déplacement dans le passage et il sera également choisi de déterminer au niveau de la surface du plancher une largeur Linf d'au moins 250 mm pour lui permettre de poser son pieds sur le plancher même dans la section de largeur minimale du passage, ou de le déplacer sans accrocher de structures.

L'élargissement du passage au-dessus de la hauteur hzmin de largeur minimale permet de disposer au niveau du haut des membres inférieurs et du bassin d'une personne (présentant des caractéristiques morphologiques moyennes) d'un volume également agrandi, et d'une largeur du passage augmentée par rapport à la largeur minimale dans la section de largeur minimale du passage.

En particulier au niveau de la partie supérieure des membres inférieurs, une largeur Lsup du passage sera avantageusement comprise entre 310 mm et 410 mm, la dite largeur Lsup étant obtenue pour une hauteur au-dessus du plancher comprise entre 600 mm et 800 mm, avantageusement sensiblement une hauteur du caisson latéral 12b au dessus du plancher 23 de l'ordre de 730 mm comme dans l'exemple illustré sur les figures.

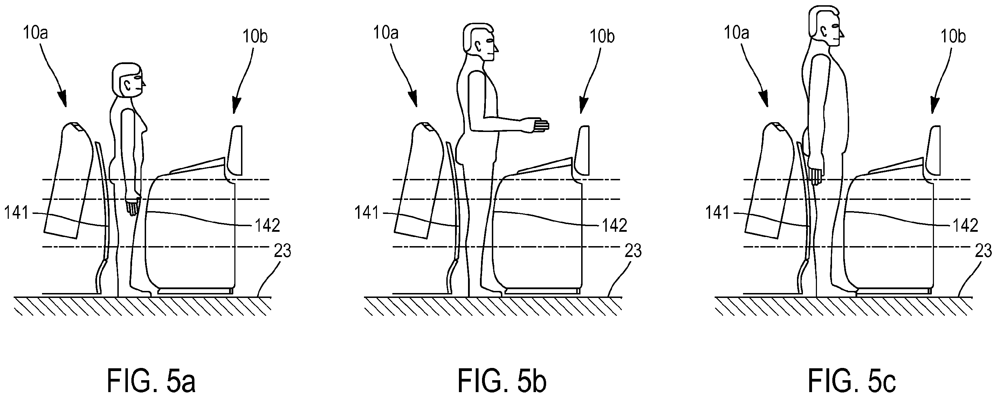

Il doit être noté que dans le cas où la surface arrière 141 s'étend sur une hauteur supérieure à l'extension de la surface avant 142, comme dans l'exemple de réalisation illustré sur les figures, en particulier visible les figures 2, 3 et 5, la convexité de ladite surface avant s'étend jusqu'au point le plus haut de ladite surface arrière de sorte qu'une personne, même de grande taille, peut conserver une posture sensiblement verticale dans le passage sans être gêné comme l'illustre la figure 5 (c).

Cette zone élargie permet à la personne de disposer de plus d'aisance au niveau supérieur des membres inférieurs et du bassin dont les dimensions sont plus importantes que celles des parties inférieures des membres inférieurs, et qui sont sujettes à un balancement lorsque la personne se déplace.

Il doit être noté qu'entre la hauteur hzmin et le niveau du plancher 23, correspondant à une valeur nulle de la hauteur hz, la largeur du passage peut être augmentée rapidement et avec une amplitude adaptée sous réserve qu'il ne soit pas créé d'interférence avec des équipements ou des structures du fauteuil vers l'avant et du caisson latéral vers l'arrière.

Ces différentes conditions sur les formes et dimensions du passage 21 dans sa partie la plus étroite sont illustrées sur les dessins de la figure 5 en conditions d'utilisation par des personnes de différentes tailles et morphologies. La vue (a) de la figure 5 montre une personne de petite taille correspondant au 5ème percentile d'une population de passagers, la vue (b) une personne de taille moyenne correspondant au 50ème percentile et la vue (c) une personne de grande taille correspondant au 95ème percentile. Dans ces trois cas recouvrant 90 % de la population considéré, il peut être noté que la personne n'est pas entravée lors de son déplacement dans le passage 21 malgré l'étroitesse dudit passage, seulement 232 millimètres dans sa partie la plus étroite de l'exemple illustré.

Il résulte également, de la correspondance de la hauteur du point le plus avant de la surface avant avec la hauteur du point le plus arrière de la surface arrière, un axe du passage 21, en vue de profil, sensiblement vertical, qui permet au passager de conserver dans le passage une posture droite et lui évite une tendance à se pencher qui serait induite par un décalage en hauteur significatif des convexités se faisant face.

En outre, la largeur minimale du passage 21 n'affecte qu'une section verticale du passage.

Comme il est visible sur la vue de dessus de la figure 1, la surface arrière 141 de la structure d'habillage 14a du siège avant est également courbe dans un plan horizontal XY et présente une convexité qui combinée avec la convexité dans le plan vertical donne à la dite structure dans la zone considérée une forme pseudo ellipsoïdale, plus particulièrement la surface arrière 141 s'approche d'une surface bombée de calotte d'ellipsoïde.

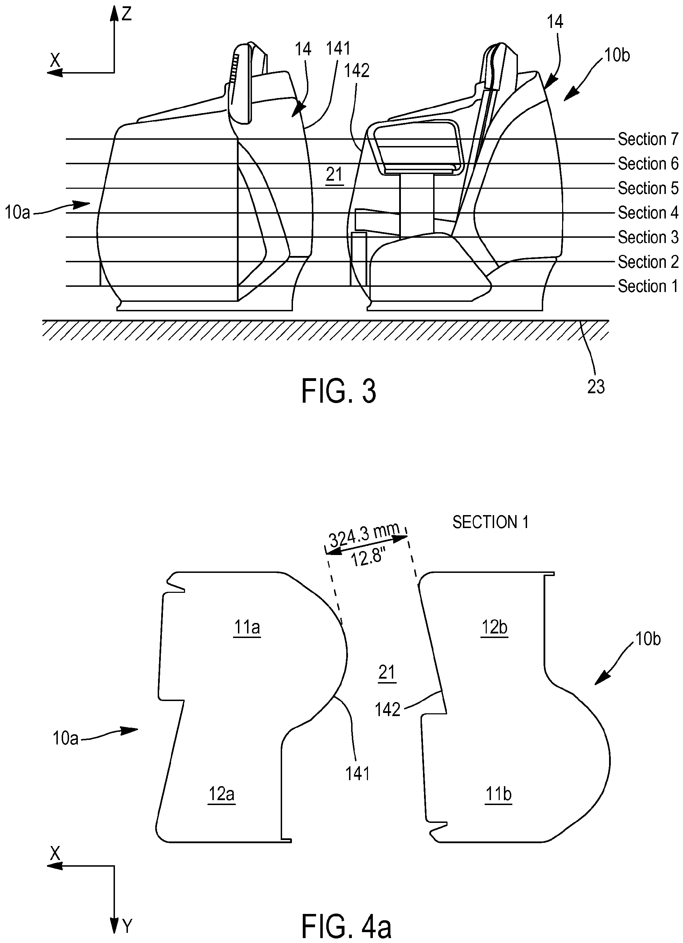

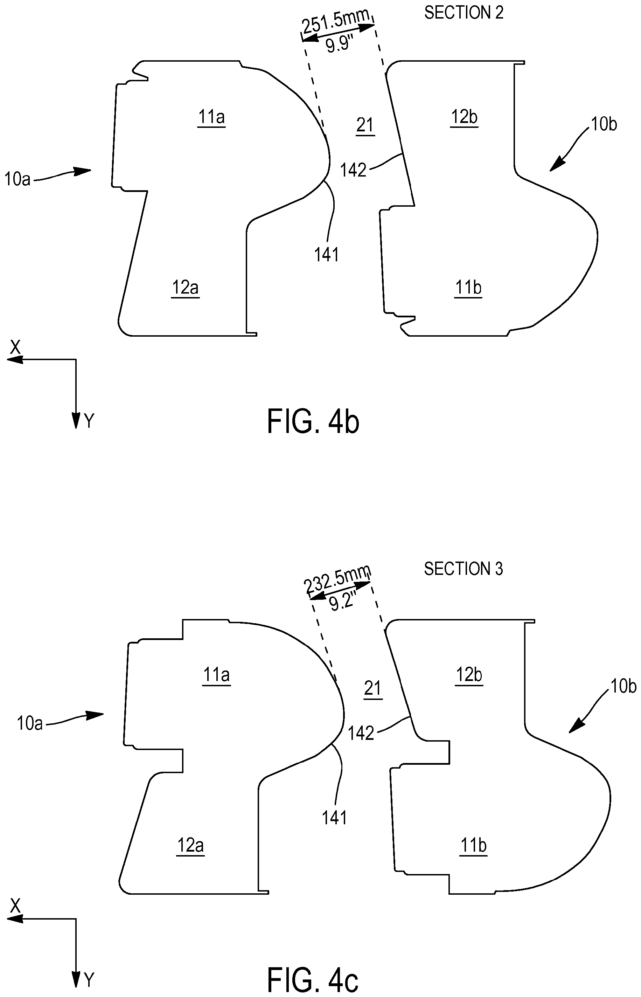

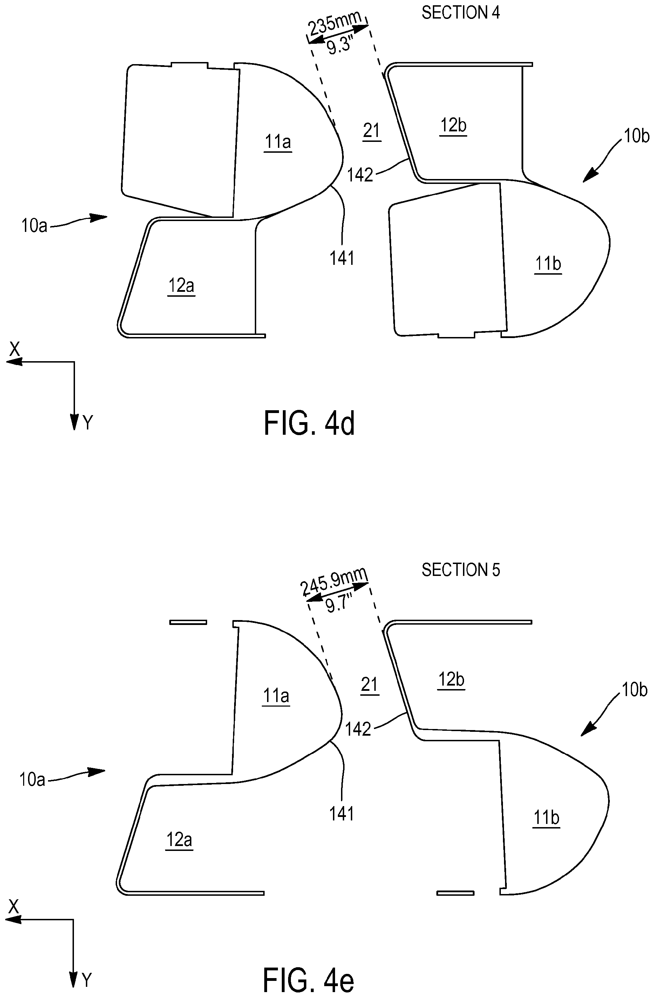

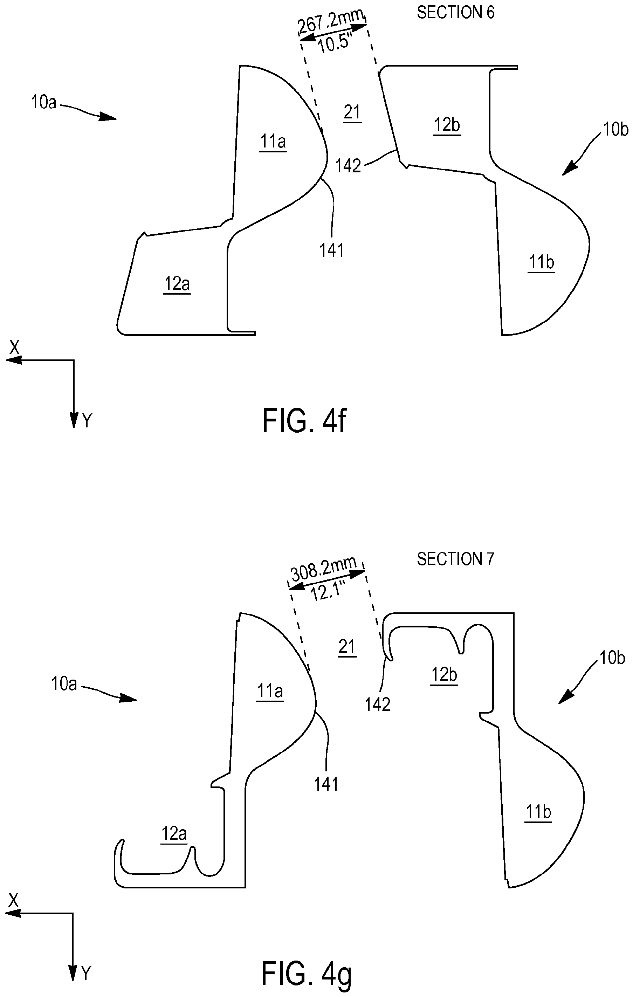

La convexité dans un plan horizontal XZ est accentuée jusqu'à s'approcher d'un tracé sensiblement en demi-cercle, c'est-à-dire une courbe au formes arrondies dont des tangentes aux extrémités ouvertes sont sensiblement parallèles, comme l'illustrent les sections des figures 4a à 4g, donnant à la structure d'habillage une forme enveloppante du siège.

La forme bombée de la surface arrière 141 de la structure d'habillage dans la zone du fauteuil correspond à une forme concave enveloppante dans la zone de la tête d'un occupant du siège, lorsque le fauteuil 11a est converti en lit, qui correspond à une forme naturelle du corps dans la zone de la tête qui n'est pas soumise, comme ce peut être le cas pour les pieds, à des mouvements amples et ou plus ou moins intenses. Cette forme enveloppante au niveau de la tête apporte également dans la configuration lit un meilleur isolement de la personne en atténuant la luminosité et les bruits ambiants.

En outre, comme l'illustrent les sections des figures 4a à 4f, la surface avant 142 de la structure d'habillage dans la zone du caisson latéral 12b du siège arrière est sensiblement rectiligne en vue de dessus, ce qui correspond à une surface avant 142 sensiblement réglée, d'un élément de surface cylindrique d'axe sensiblement horizontal, s'appuyant sur la courbe décrite supra dans la section comportant la largeur minimale Lmin du passage 21.

Cette forme du caisson latéral 12b permet de former un logement de pieds de relativement grandes dimensions, en particulier pour une largeur dudit logement de pieds, dans lequel il est possible pour une personne couchée de bouger les pieds et de se retourner en position lit sans difficulté.

Dans une forme de réalisation, correspondant au cas de l'exemple illustré sur les figures, des génératrices de l'élément de surface cylindrique de la surface avant 142 forme dans le plan horizontal XY un angle de déviation par rapport à la direction latérale Y. Cet angle de déviation, le cas échéant associé à une dissymétrie en vue de dessus de la forme arrondie de la surface arrière 141, permet d'orienter un axe du passage 21 non perpendiculaire par rapport à la direction longitudinale X de l'allée 22 pour une meilleure ergonomie dudit passage, et permet de décaler latéralement la partie la plus étroite du passage, avantageusement du côté de l'allée, par rapport à un axe des fauteuils 11a, 11c de l'ensemble situés du côté de ladite allée.

Avantageusement la hauteur du plan de couchage en position lit est voisine de la hauteur hzmin de sorte à bénéficier de l'extension maximale vers l'avant de la zone de repos des pieds et de l'extension maximale vers l'arrière au niveau de la tête du passager.

Ainsi le passage 21 s'élargit rapidement en vue de dessus de chaque côté de sa partie la plus étroite, présentant une forme de convergent-divergent, avec un col de largeur Lmin dans une section réalisée à la hauteur hzmin comme sur la figure 4c.

Cette forme de convergent-divergent a également pour effet de guider naturellement l'utilisateur du siège lorsqu'il s'engage dans le passage 21 et de lui procurer une capacité de mouvement augmentée dés que la largeur minimale dudit passage est franchie, en particulier lorsque la personne accède à son siège depuis l'espace ouvert d'une allée.

Cette caractéristique s'observe sur la figure 4c qui représente schématiquement les contours enveloppes du siège 10a avant et du siège 10b arrière dans une section formée dans un plan horizontal XY à la hauteur hzmin.

Cette caractéristique se retrouve également sur les différentes sections, formées dans des plans horizontaux décalés par rapport au plan de la section de la figure 4c, des figures 4a à 4g, la largeur du passage minimum dans la section considérée évoluant, comme il a été décrit précédemment pour augmenter en dessous et en dessus du plan correspondant à la valeur minimale de la largeur Lmin du passage 21, et étant toujours supérieure à ladite largeur Lmin.

Dans l'exemple de réalisation illustré, la largeur du passage minimum en fonction de la hauteur au dessus du plancher évolue comme indiqué dans le tableau suivant :

| Fig n° | Section n° | hz - hzmin en mm | Passage min en mm | Passage min en inches |
|---|---|---|---|---|
| 4a | 1 | -200 | 324 | 12,8 |
| 4b | 2 | -100 | 251 | 9,9 |
| 4c | 3 | 0 / hzmin | 232 | 9,2 |
| 4d | 4 | +100 | 235 | 9,3 |
| 4e | 5 | +200 | 246 | 9,7 |
| 4f | 6 | +300 | 267 | 10,5 |
| 4g | 7 | +400 | 308 | 12,1 |

Dans cet exemple, la hauteur hzmin (plan de la section 4c) de la largeur minimale est de 330 mm au dessus du plancher.

Les valeurs ci-dessus ne sont données qu'au titre d'une illustration par un exemple concret d'une forme de réalisation qui procure un confort adapté pour une classe « affaire » dans un aéronef, et elle peuvent être modifiée de plus ou moins 10 mm en conservant un niveau de confort acceptable si la largeur minimale Lmin est diminuée, et légèrement augmenté au pris d'un allongement du pas des sièges si la largeur minimale Lmin est augmentée.

Il n'est pas dans le tableau considéré de largeur du passage minimum au-dessus de la côte +400 mm par rapport à la hauteur hzmin, la surface avant 142 du passage étant considérée limitée à cette hauteur dans l'exemple détaillé. Cependant, la surface arrière 141 toujours convexe au dessus de cette côte conduit à poursuivre l'élargissement du passage qui serait virtuellement déterminé en prolongeant le profil convexe de la surface avant 142.

Ces valeurs peuvent cependant être modifiées par l'homme du métier en plus ou en moins en fonction du niveau de confort qu'il souhaite obtenir ou à l'opposé de contraintes qu'il accepte d'introduire.

Bien évidemment la valeur de la largeur minimale Lmin du passage 21 à la hauteur hzmin doit respecter une valeur minimale de passage acceptable non seulement pour des raisons de confort vis à vis de l'utilisateur du siège, mais également pour permettre une évacuation d'urgence lorsque des normes sont applicables comme dans la plupart des véhicules de transport collectif, par exemple les aéronefs de transport.

Il n'y a pas de limite théorique à choisir une valeur plus grande pour la largeur minimale Lmin du passage 21, mais il doit être remarqué que le choix d'une largeur minimale de passage augmentée va à l'encontre de la réduction du pas des sièges recherchée par l'invention et, qu'au delà d'une valeur de passage standard, le confort pour l'utilisateur n'est pas nécessairement amélioré.

Avantageusement la largeur minimale Lmin du passage 21 est comprise entre 200 mm et 300 mm, les valeurs des largeurs de passage pour les autres hauteurs que la hauteur hzmin étant adaptées pour faciliter la circulation dans le passage 21 comme décrit précédemment.

Au niveau du plancher, la largeur Linf est avantageusement égale ou supérieure à 310 mm pour le passage des pieds et est élargie par rapport à la largeur minimale, au moins dans la section verticale de largeur minimale, de préférence vers l'avant, c'est-à-dire par la forme de la surface arrière 141 de la structure d'habillage du siège avant 10a.

Comme le montre l'exemple de réalisation illustré sur la figure 2, les formes des surfaces avant 141 et arrière 142 peuvent être adaptées localement, par exemple au niveau d'un raccordement de la structure d'habillage au plancher. De telles adaptations, sans remettre en cause les principes de l'invention, permettent par exemple de s'adapter à des contraintes de liaisons des structures du siège aux structures du plancher ou de faciliter l'entretien des zones soumises aux matières pouvant être transportées par des semelles de chaussures.

Il sera toutefois recherché une largeur Linf minimale au niveau du plancher, pour hz=0 si le plancher est pris comme référence de hauteur, de sorte que le passager utilisant le passage puisse passer ses pieds sans risquer de se trouver coincer ou gêner.

L'invention permet ainsi d'optimiser l'espace utilisé dans une cabine par un agencement en quinconce des sièges qui permet de réduire la largeur nécessaire pour agencer deux rangées de sièges et par la diminution de la distance nécessaire entre deux sièges d'une même rangée lorsqu'un passage praticable avec confort acceptable pour une population d'utilisateurs doit être assuré vers une allée de circulation.

Cette configuration s'avère avantageuse dans le cas d'un ensemble agencé contre une cloison, par exemple en 2+2 passagers de front dans un aéronef, ou lorsque deux ensembles sont juxtaposés, par exemple pour former un agencement en 2+4+2 passagers de front dans un aéronef.

## Revendications

1. - Ensemble comportant une pluralité de sièges (10a, 10b, 10c) agencés en une rangée suivant un axe longitudinal X, chaque siège comportant un fauteuil (11a, 11b, 11c) et un caisson latéral (12a, 12b, 12c) agencé latéralement audit fauteuil, dans lequel ensemble : chaque fauteuil présente un côté avant orienté sensiblement dans une même direction ; les fauteuils d'une part et les caissons latéraux d'autre part sont agencés en quinconce suivant deux rangées parallèles à l'axe longitudinal X, chaque siège comportant une coque (14) d'habillage déterminant une surface arrière (141) dans une zone arrière du fauteuil et déterminant une surface avant (142) dans une zone avant du caisson latéral, un espace entre une surface arrière (141) d'un siège avant et une surface avant (142) d'un siège arrière, situé immédiatement en arrière dudit siège avant dans l'ensemble, formant un passage (21) pour un occupant dudit siège arrière, **caractérisé en ce que** :
- dans une coupe formée dans un plan vertical dans lequel se trouve une largeur minimale Lmin du passage (21), la surface arrière (141) et la surface avant (142) présentent des profils convexes se faisant face, une largeur L(hz) dudit passage dans ledit plan vertical augmentant continûment dans le sens des hauteurs hz, au-dessus d'un plancher (23) de cabine de référence, décroissantes depuis une hauteur hzmin de la largeur minimale Lmin, au moins jusqu'à proximité du plancher (23), et ladite largeur L(hz) augmentant continûment dans le sens des hauteurs hz croissantes depuis ladite hauteur hzmin de la largeur minimale Lmin, de sorte que la largeur L(hz) présente un seul point de changement de sens de variation (hzmin, Lmin) ;
- la surface arrière (141) présente une forme convexe dans des coupes suivant des plans horizontaux, donnant, combinée aux profils convexes dans une coupe suivant un plan vertical, à ladite surface arrière une forme de calotte pseudo ellipsoïdale ;
- la surface avant (142) dans une zone avant du caisson latéral (12a, 12b, 12c) présente une forme sensiblement droite dans des coupes suivant des plans horizontaux, donnant à ladite surface avant une forme de cylindre partiel d'axe et de génératrices sensiblement horizontaux ;
- la surface arrière du siège avant et la surface avant du siège arrière conférant au passage (21) une forme de convergent-divergent avec un col de largeur Lmin guidant un utilisateur du siège.

2. - Ensemble suivant la revendication 1 dans lequel la largeur minimale Lmin du passage (21) est comprise entre 200 mm et 300 mm et dans lequel la hauteur hzmin de ladite largeur minimale au-dessus du plancher (23) est comprise entre 200 mm et 500 mm.

3. - Ensemble suivant la revendication 1 ou la revendication 2 dans lequel une valeur maximale de la largeur L(hz) du passage (21), dans le plan vertical dans lequel se trouve la largeur minimale Lmin dudit passage, est, pour les hauteurs hz inférieures à la hauteur hzmin, comprise entre 310 mm et 400 mm, ladite valeur maximale étant située entre le plancher et une hauteur hz égale ou inférieure à 150 mm, la largeur L(hz=0) du passage au niveau du plancher étant au moins égale à 250 mm.

4. - Ensemble suivant l'une des revendications précédentes dans lequel une valeur minimale de la largeur L(hz) du passage (21) mesurée dans une section horizontale est, pour les hauteurs hz supérieures à la hauteur hzmin, supérieure à la largeur minimale Lmin dudit passage et inférieure ou égale à 400 mm, une plus grande valeur de ladite valeur minimale de la largeur L(hz) étant atteinte pour une hauteur hz comprise entre 600 mm 800 mm.

5. - Ensemble suivant l'une des revendications précédentes dans lequel le caisson latéral (12a, 12b) d'un siège (10a, 10b) avant comporte un volume ouvert vers l'arrière formant un logement de pieds pour un occupant d'un siège (10b, 10c) arrière, dont le fauteuil (11b,11c) est sensiblement aligné avec ledit volume ouvert du fait de l'agencement en quinconce des fauteuils et des caissons latéraux.

6. - Ensemble suivant la revendication 5 dans lequel un fauteuil (11a, 11b, 11c) est convertible en lit par des mouvements relatifs d'un dossier et d'une assise dudit fauteuil pour former avec une surface d'un repose pieds (113), sensiblement horizontale à demeure ou déployée dans le volume ouvert formant le logement de pieds, du caisson latéral du siège situé devant le siège du fauteuil considéré, un plan de couchage.

7. - Ensemble suivant l'une des revendications précédentes dans lequel la largeur L(hz) du passage (21), dans la coupe formée dans un plan vertical dans lequel se trouve la largeur minimale Lmin dudit passage, est de 324+/-10 mm à une hauteur au-dessus du plancher (23) hz=130 mm, de 251+/-10 mm pour hz=230 mm, de 232+/-10 mm pour hz=330 mm, de 235+/-10 mm pour hz=430 mm, de 246+/-10 mm pour hz=530 mm, de 267+/-10 mm pour hz=630 mm, de 308+/-10 mm pour hz=730mm.

## Patentansprüche

1. Anordnung, die eine Vielzahl von Sitzen (10a, 10b, 10c) umfasst, die in einer Reihe entlang einer Längsachse X angeordnet sind, wobei jeder Sitz einen Lehnstuhl (11a, 11b, 11c) und eine seitliches Gehäuse (12a, 12b, 12c) umfasst, das seitlich des Lehnstuhls angeordnet ist, wobei in der Anordnung: jeder Lehnstuhl eine Vorderseite aufweist, die im Wesentlichen in die gleiche Richtung ausgerichtet ist; die Lehnstühle einerseits und die seitlichen Gehäuse andererseits in zwei Reihen, die parallel zur Längsachse X verlaufen, versetzt angeordnet sind, wobei jeder Lehnstuhl eine Verkleidungsschale (14), die eine hintere Fläche (141) in einem hinteren Bereich des Lehnstuhls festlegt und eine vordere Fläche (142) in einem vorderen Bereich des seitlichen Gehäuses festlegt, wobei ein Raum zwischen einer hinteren Fläche (141) eines vorderen Sitzes und einer vorderen Fläche (142) eines hinteren Sitzes, der sich unmittelbar hinter dem vorderen Sitz in der Anordnung befindet, einen Durchgang (21) für einen Insassen des hinteren Sitzes bildet, **dadurch gekennzeichnet, dass**:
- in einem Schnitt, der in einer vertikalen Ebene gebildet wird, in der eine Mindestbreite Lmin des Durchgangs (21) liegt, weisen die hintere Fläche (141) und die vordere Fläche (142) einander zugewandte konvexe Profile auf, wobei eine Breite L(hz) des Durchgangs sich in der vertikalen Ebene, die kontinuierlich in der Richtung der Höhen hz zunimmt, oberhalb eines Referenzkabinenbodens (23) von einer Höhe hzmin der Mindestbreite Lmin mindestens bis in die Nähe des Bodens (23) abnimmt und die Breite L(hz), die kontinuierlich in der Richtung der Höhen hz zunimmt, von der Höhe hzmin der Mindestbreite L zunimmt, so dass die Breite L(hz) einen einzigen Punkt aufweist, an dem sich die Richtung der Variation (hzmin, Lmin) verändert;
- die hintere Fläche (141) in Schnitten entlang horizontaler Ebenen eine konvexe Form aufweist, wodurch in Kombination mit den konvexen Profilen in einem Schnitt entlang einer vertikalen Ebene die hintere Flache eine pseudo-ellipsoidische Kalottenform aufweist;
- die vordere Fläche (142) in einem vorderen Bereich des seitlichen Gehäuses (12a, 12b, 12c) in Schnitten entlang horizontaler Ebenen eine im Wesentlichen gerade Form aufweist, wodurch die vordere Fläche eine Form eines Teilzylinders mit im Wesentlichen horizontaler Achse und Mantellinien aufweist;
- die hintere Fläche des vorderen Sitzes und die vordere Fläche des hinteren Sitzes dem Durchgang (21) eine konvergent-divergente Form mit einer Passbreite Lmin, die einen Benutzer des Sitzes führt, verleiht.

2. Anordnung nach Anspruch 1, wobei die Mindestbreite Lmin des Durchgangs (21) zwischen 200 mm und 300 mm beträgt und die Höhe hzmin der Mindestbreite über dem Boden (23) zwischen 200 mm und 500 mm beträgt.

3. Anordnung nach Anspruch 1 oder Anspruch 2, wobei ein Maximalwert der Breite L(hz) des Durchgangs (21) in der vertikalen Ebene, in der sich die Mindestbreite Lmin des Durchgangs befindet, für Höhen hz, die kleiner als die Höhe hzmin sind, zwischen 310 mm und 400 mm liegt, wobei der Maximalwert zwischen dem Boden und einer Höhe hz gleich oder kleiner als 150 mm ist, und die Breite L(hz=0) des Durchgangs auf Bodenniveau mindestens gleich 250 mm ist.

4. Anordnung nach einem der vorhergehenden Ansprüche, wobei ein Mindestwert der Breite L(hz) des Durchgangs (21), gemessen in einem horizontalen Abschnitt, für die Höhen hz, die größer als die Höhe hzmin ist, größer ist als die Mindestbreite Lmin des Durchgangs und kleiner oder gleich 400 mm ist, wobei ein größerer Wert des Mindestwerts der Breite L(hz) für eine Höhe hz zwischen 600 mm und 800 mm erreicht wird.

5. Anordnung nach einem der vorhergehenden Ansprüche, wobei das seitliche Gehäuse (12a, 12b) eines vorderen Sitzes (10a, 10b) ein nach hinten offenes Volumen umfasst, das einen Raum für die Füße eines Insassen eines hinteren Sitzes (10b, 10c) bildet, dessen Lehnstuhl (11b, 11c) aufgrund des versetzten Aufbaus der Lehnstühle und der seitlichen Gehäuse im Wesentlichen mit dem offenen Volumen ausgerichtet ist.

6. Anordnung nach Anspruch 5, wobei ein Lehnstuhl (11a, 11b, 11c) durch Relativbewegungen einer Rückenlehne und einer Sitzfläche des Lehnstuhls in ein Bett umgewandelt werden kann, um mit einer Fläche einer Fußstütze (113), die im Wesentlichen dauerhaft horizontal bleibt oder in das offene Volumen, das den Fußraum bildet, ausgefahren wird, und des seitlichen Gehäuses des Sitzes, das sich vor dem Sitz des betreffenden Lehnstuhls befindet, eine Liegefläche zu bilden.

7. Anordnung nach einem der vorhergehenden Ansprüche, wobei die Breite L(hz) des Durchgangs (21) in dem Schnitt, der in einer vertikalen Ebene gebildet wird, in der sich die Mindestbreite Lmin des Durchgangs befindet, 324+/- 10 mm in einer Höhe über dem Boden (23) hz=130 mm, 251+/- 10 mm für hz=230 mm, 232+/-10 mm für hz=330 mm, 235+/- 10 mm für hz=430 mm, 246+/-10 mm für hz=530 mm, 267+/- 10 mm für hz=630 mm und 308+/-10 mm für hz=730 mm beträgt.

## Claims

1. An assembly including a plurality of seats (10a, 10b, 10c) arranged in a row along a longitudinal axis X, each seat including an armchair (11a, 11b, 11c) and a lateral box (12a, 12b, 12c) arranged laterally to said armchair, in which assembly: each armchair has a front side oriented substantially in the same direction; the armchairs, on the one hand, and the lateral boxes, on the other hand, are arranged in a staggered manner in two rows parallel to the longitudinal axis X, each seat including a covering shell (14) determining a rear surface (141) in a rear zone of the armchair and determining a front surface (142) in a front zone of the lateral box, a space between a rear surface (141) of a front seat and a front surface (142) of a rear seat, located immediately behind said front seat in the assembly, forming a passage (21) for an occupant of said rear seat, **characterized in that**:
- in a section formed in a vertical plane in which there is a minimum width Lmin of the passage (21), the rear surface (141) and the front surface (142) have convex profiles facing each other, a width L(hz) of said passage in said vertical plane increasing continuously in the direction of the heights hz, above a reference cabin floor (23), decreasing from a height hzmin of the minimum width Lmin, at least up to the vicinity of the floor (23), and said width L(hz) increasing continuously in the direction of the increasing heights hz from said height hzmin of the minimum width Lmin, such that the width L(hz) has a single point of change in the direction of variation (hzmin, Lmin);
- the rear surface (141) has a convex shape in sections along horizontal planes, giving, combined with the convex profiles in a section along a vertical plane, to said rear surface a pseudo-ellipsoidal cap shape;
- the front surface (142) in a front zone of the lateral box (12a, 12b, 12c) has a substantially straight shape in sections along horizontal planes, giving to said front surface a partial cylinder shape with substantially horizontal axis and generators;
- the rear surface of the front seat and the front surface of the rear seat giving the passage (21) a convergent-divergent shape with a neck of width Lmin guiding a user of the seat.

2. The assembly according to claim 1, wherein the minimum width Lmin of the passage (21) is comprised between 200 mm and 300 mm and wherein the height hzmin of said minimum width above the floor (23) is comprised between 200 mm and 500 mm.

3. The assembly according to claim 1 or claim 2, wherein a maximum value of the width L(hz) of the passage (21), in the vertical plane in which the minimum width Lmin of said passage is located, is, for heights hz less than the height hzmin, comprised between 310 mm and 400 mm, said maximum value being located between the floor and a height hz equal to or less than 150 mm, the width L(hz=0) of the passage at the floor level being at least equal to 250 mm.

4. The assembly according to one of the preceding claims, wherein a minimum value of the width L(hz) of the passage (21) measured in a horizontal section is, for heights hz which are greater than the height hzmin, greater than the minimum width Lmin of said passage and less than or equal to 400 mm, a greater value of said minimum value of the width L(hz) being reached for a height hz comprised between 600 mm and 800 mm.

5. The assembly according to one of the preceding claims, wherein the lateral box (12a, 12b) of a front seat (10a, 10b) includes a volume open to the rear forming a footwell for an occupant of a rear seat (10b, 10c), whose armchair (11b, 11c) is substantially aligned with said open volume due to the staggered arrangement of the armchairs and the lateral boxes.

6. The assembly according to claim 5, wherein an armchair (11a, 11b, 11c) is convertible into a bed by relative movements of a backrest and a seating of said armchair to form, with a surface of a footrest (113), which is substantially horizontal permanently or deployed in the open volume forming the footwell, of the lateral box of the seat located in front of the seat of the considered armchair, a lying surface.

7. The assembly according to one of the preceding claims, wherein the width L(hz) of the passage (21), in the section formed in a vertical plane in which the minimum width Lmin of said passage is located, is 324+/-10 mm at a height above the floor (23) hz=130 mm, 251+/-10 mm for hz=230 mm, 232+/-10 mm for hz=330 mm, 235+/-10 mm for hz=430 mm, 246+/-10 mm for hz=530 mm, 267+/-10 mm for hz=630 mm, 308+/-10 mm for hz=730mm.
